# EUROPÄISCHE PATENTSCHRIFT

(11) **EP 1 666 674 B1**
(45) Veröffentlichungstag und Bekanntmachung des Hinweises auf die Patenterteilung: **01.02.2012**
(21) Anmeldenummer: 05004117.7
(22) Anmeldetag: 25.02.2005
(51) Int. Cl.: E03B 9/14

(54) **Regulier- und Absperrarmatur und Verfahren zu deren Endmontage**
Regulating and shut-off armature and method of its final assembly
Armature de régulation et d'arrêt et procédé de son montage final

(30) Priorität: 11.11.2004 DE 102004054612
(43) Veröffentlichungstag der Anmeldung: 07.06.2006
(60) Teilanmeldung: 10015397.2
(73) Patentinhaber: Gebr. Kemper GmbH + Co. KG Metallwerke, 57462 Olpe (DE)
(72) Erfinder: Fries, Stefan, 57462 Olpe/Biggesee (DE)
(74) Vertreter: Grünecker, Kinkeldey, Stockmair & Schwanhäusser

(56) Entgegenhaltungen:
- EP-A1- 1 557 500
- DE-A1- 10 315 224
- DE-U- 20 001 883
- DE-U1- 29 820 782

## Beschreibung

Die vorliegende Erfindung betrifft eine Regulier- und Absperrarmatur mit den Merkmalen der Oberbegriffs der Anspruchs 1, wie sie beispielsweise aus dem DE-U-200 01 883 bekannt ist.

Eine derartige Armatur hat ein Ventilgehäuse, in dem ein Ventilkegel verschieblich geführt und dichtend an einen an dem Ventilgehäuse ausgebildeten Ventilsitz zur Anlage bringbar ist. Ferner weist das Regulier- und Absperrventil ein Ventilauslaufgehäuse auf, in das ein Ventiloberteil mit einer drehbar in diesem angeordneten und mit einem Drehgriff verbundenen Spindel eingeschraubt ist. Zwischen dem Ventilgehäuse und dem Ventilauslassgehäuse ist ein Zwischenrohr vorgesehen, dessen Länge derart bemessen ist, dass das Ventilgehäuse im Innenbereich eines Gebäudes und das Ventilauslaufgehäuse die Außenwand des Gebäudes überragend angeordnet werden kann. Das Zwischenrohr umgibt eine Zwischenspindel, die mit der Spindel im Eingriff steht, so dass durch Drehen an dem Drehgriff eine axiale Verstellung der Zwischenspindel erfolgt, die auf den Ventilkegel übertragen wird, welcher in Wirkverbindung mit der Zwischenspindel steht. Üblicherweise ist der Ventilkegel in seiner Führung längsverschieblich gelagert und mittels Federkraft gegen den Ventilsitz vorgespannt, so dass die Funktion eines Rückflussverhinderers gegeben ist. Ferner weist die vorbekannte Regulier- und Absperrarmatur ein Belüftungsventil auf, das ein bei geöffnetem Ventilkegel eine Belüftungsöffnung verschließendes Dichtelement hat, welches die Belüftungsöffnung bei geschlossenem Ventilkegel freigibt.

Bei der vorbekannten Regulier- und Absperrarmatur ist ein unter Federvorspannung an dem Ventilauslaufgehäuse angebrachter Belüftungsventilkörper vorgesehen. Dieser wird bei einem in dem Ventilauslaufgehäuse wirkenden Innendruck, der auch auf den Belüftungsventilkörper wirkt, im Belüftungsventil geschlossen, wohingegen bei abgesperrter Armatur und ablaufendem Wasser aus der Armatur sich das Belüftungsventil bei abgebautem Innendruck schwerkraftbedingt öffnet, um einen zwischen der Zwischenspindel und dem Zwischenrohr zwischen dem Ventiloberteil und dem Ventilkegel ausgebildeten Zwischenraum zu belüften, wenn die Absperrarmatur abgesperrt ist, d.h. der Ventilkegel an dem Ventilsitz dichtend anliegt. Die Steuerung des Belüftungsventils ist aber nicht immer zuverlässig. So kann es vorkommen, dass an einem Auslassstutzen des Ventilauslaufgehäuses ein Schlauch angeschlossen ist, welcher endseitig verschlossen wird, bevor die Regulier- und Absperrarmatur geschlossen wird. In diesem Fall wird der Wasserinnendruck in dem Ventilauslaufgehäuse nicht abgebaut, so dass das Belüftungsventil nicht schwerkraftbedingt öffnet und eine Belüftung der Armatur danach nicht erfolgt. Bei Frost kann die Armatur beschädigt werden.

Darüber hinaus besteht bei Regulier- und Absperrarmaturen das Problem, dass aufgrund des Nachlaufens von Wasser aus der Armatur bei der Belüftung der Benutzer der Armatur in dem Glauben, der Ventilkegel sei noch nicht zur Anlage an den Ventilsitz gelangt, den Drehgriff weiter dreht, was zu einer übermäßigen Beanspruchung des Ventilkegels bzw. des Ventilsitzes führt.

Aus der US 4,475,570 ist eine Regulier- und Absperrarmatur bekannt, bei dem der Ventilkegel über eine Zwischenspindel verdrehfest mit dem Drehgriff verbunden ist. Der Ventilkegel wird von einer in dem Ventilsitzgehäuse im Gewindeeingriff stehenden Hülse getragen, die einen Wasserdurchgang in axialer Richtung über den Gewindeteil des Ventilsitzgehäuses zulässt. Bei der aus der US 4,475,570 bekannten Regulier-Absperrarmatur ist die Spindel und die Zwischenspindel als einteiliges Bauteil ausgebildet, so dass im Gegensatz zu dem gattungsbildenden Stand der Technik, bei dem aufgrund der Ausgestaltung des Ventiloberteils der Drehgriff bei Betätigung nicht steigt, der Drehgriff zusammen mit der Spindel und Zwischenspindel bei Drehbetätigung seine Lage verändert. Mit der Spindel ist ein Belüftungselement verbunden, welches an seinem ventilauslaufgehäuseseitigen Ende eine Anlauframpe aufweist und an dem anderen Ende mit einer Dichtung versehen ist, die dichtend in das drehgriffseitige Ende des Ventilauslaufgehäuses eingesetzt ist.

Beim Absperren der Armatur wandert das Belüftungselement zusammen mit der Spindel in Richtung auf das Ventilsitzgehäuse. Hierbei gleitet zunächst der Dichtring in dem Ventilauslaufgehäuse. Die Anlauframpe stößt dann gegen das Betätigungsende eines vorgespannten Belüftungsventils. Der Ventilkörper besteht in seinem vorderen Teil aus einem mit einem Dichtring versehenen Zylinderabschnitt, der an dem Ventilsitzgehäuse ausgespart ist. Beim Absperren der Armatur läuft dieser Zylinderabschnitt in eine zylindrische Bohrung ein. Zur gleichen Zeit läuft die Ablauframpe gegen das Belüftungsventil, welches bei fortschreitender Drehbewegung zum Absperren der Armatur das Belüftungsventil durch Relativbewegung vollständig öffnet. Dabei drängt der zylindrische Abschnitt des Ventilkegels tiefer in die zylindrische Bohrung ein, bis ein dahinterliegender Konusabschnitt des Ventilkegels gegen das Ventilsitzgehäuse angelegt und die axiale Relativbewegung des Ventilkegels zusammen mit der Zwischenspindel und der Spindel gestoppt wird. Zu diesem Zeitpunkt tritt die an dem Belüftungselement vorgesehene Dichtung aus ihrer zylindrischen Anlagefläche an dem Ventilauslaufgehäuse aus, so dass auch der zwischen dem Dichtring und dem vorderen Ende des Ventilauslaufgehäuses eingeschlossene Bereich belüftet werden kann.

Die aus der US 4,475,570 vorbekannte Regulier- und Absperrarmatur weist zum Einen den Nachteil auf, dass das Belüftungselement nicht immer zuverlässig gegenüber dem Ventilauslaufgehäuse abgedichtet werden kann, so dass eine Leckage durch die zwischen der Spindel bzw. Zwischenspindel und dem Ventilauslaufgehäuse ausgebildeten Ringräume bei einem dauerhaften Betrieb der Absperrarmatur nicht zuverlässig vermieden werden kann. Als wesentlicher weiterer Nachteil ist zum Anderen zu nennen, dass im Bereich der Belüftungsöffnung Wasser zwischen die Dichtflächen gelangen kann, durch welches bei Frosttemperaturen die freie Betätigung des Belüftungsventils verhindert oder gegebenenfalls zu Schäden in der Abdichtstruktur bei Betätigung der Absperrarmatur unter Frostbedingungen führen kann. Darüber hinaus erfordert die vorbekannte Absperrarmatur die Einhaltung von engen Fertigungstoleranzen, um das synchrone Einlaufen der Dichtung im Bereich des Ventilsitzgehäuses und das Auslaufen des Dichtringes im Bereich des Ventilauslaufgehäuses zeitgleich stattfinden zu lassen.

Es ist bekannt, bei der Endmontage der Armatur diese über das Ventilsitzgehäuse im Innenbereich eines Gebäudes zu befestigen und das Zwischenrohr über eine das Mauerwerk durchsetzende Bohrung nach außen zu führen. Das Zwischenrohr und die Zwischenspindel sind herstellerseits mit Rücksicht auf unterschiedliche Wandstärken des Gebäudes hinreichend lang ausgebildet und so ist es erforderlich, vor dem Anbringen des Ventilauslaufgehäuses das Zwischenrohr und die Zwischenspindel abzulängen. Hierzu muss zunächst eine an dem vorderen Ende auf das Zwischenrohr aufgesetzte Frostkappe entfernt werden. Danach wird die Zwischenspindel aus dem Zwischenrohr herausgenommen. Mit einer ersten Schablone, die auf die Fassade aufgelegt wird, wird eine Stelle vorbestimmt, an der das Zwischenrohr abzulängen ist. Diese Stelle wird markiert und ein von der Gebäudewand vorspringender vorderer Endabschnitt wird von dem Zwischenrohr abgetrennt. Im vorderen Bereich des verbleibenden vorspringenden Längenabschnitts des Zwischenrohres das vom Hersteller üblicherweise mit einem Außengewinde versehen ist, wird das Auslaufgehäuse dichtend aufgeschraubt. Nunmehr wird die Zwischenspindel wieder in die Armatur eingeführt. Über das freie Ende der über die Armatur herausragenden Zwischenspindel wird eine zweite Schablone aufgeschoben, durch die die Trennstelle für die Zwischenspindel in Abhängigkeit eines vorbestimmten Bezugspunktes des Auslaufgehäuses bestimmbar ist. Die Zwischenspindel wird danach zusammen mit der zweiten Schablone aus der Armatur entnommen. Hierbei ist darauf zu achten, dass keine Relativbewegung zwischen der zweiten Schablone und der Zwischenspindel stattfindet. Die Zwischenspindel wird nunmehr abgelängt und danach in der Zwischenspindelaufnahme des Ventiloberteils befestigt und mit diesem in die Armatur eingeschoben.

Diese Verfahrensschritte sind relativ aufwendig. Darüber hinaus besteht bei der Benutzung der zweiten Schablone das weitere Problem, dass zur Ermittlung der verbleibenden Länge der Zwischenspindel bei Benutzung der zweiten Schablone die Zwischenspindel fest in die Armatur eingedrückt werden muss, um eine von dem Rückschlagventil ausgeübte Federkraft zu kompensieren und die Verbindungshülse des Rückschlagventils formschlüssig gegen den Ventilkegel anzulegen. Dementsprechend wird häufig die Zwischenspindel zu kurz abgelängt, da die zweite Schablone gegen einen Anschlagpunkt an dem Auslaufgehäuse zur Anlage gebracht wird, bevor die Zwischenspindel vollständig in Richtung auf das Ventilsitzgehäuse eingedrückt worden ist. Ferner kann es vorkommen, dass es bei einer zunächst korrekten Positionierung der zweiten Schablone bei einer unkontrollierten und von der Feder des Rückschlagventils verursachten Relativbewegung der Zwischenspindel zu einer Verschiebung der zweiten Schablone kommt. Dabei ist eine korrekte Ermittlung des abzutrennenden Endabschnitts der Zwischenspindel aber selbst dann nicht gewährleistet, wenn der Monteur diese Relativbewegung feststellt. Häufig schiebt der Monteur zur vermeintlichen Korrektur die Schablone bei festgehaltener Zwischenspindel wieder bis zu dem Bezugspunkt des Auslaufgehäuses, was zu einem zu kurzen Ablängen der Zwischenspindel führt.

Aus den genannten Gründen kann mit den vorerwähnten manuellen Verfahren zur Ermittlung der zutreffenden Länge des Zwischenrohres einerseits und der Zwischenspindel andererseits eine korrekte Endmontage der Regulier- und Absperrarmatur nicht zuverlässig gewährleistet werden. Mit der DE-U-203 05 405 ist dementsprechend bereits eine Auslaufarmatur der oben erwähnten Art vorgeschlagen worden, bei der jedenfalls das dem Auslaufgehäuse zugewandte Ende des Zwischenrohres wie auch das entsprechende Ende der Zwischenspindel in aufeinander abgestimmte Ablängsegmente unterteilt sind. Das Ablängen korrespondierender Ablängsegmente an dem Zwischenrohr einerseits und an der Zwischenspindel andererseits führt dementsprechend immer zu einer korrekten Abstimmung der beiderseitigen Längen. Bei diesem Stand der Technik besteht indes das Problem, dass lediglich diskrete Ablängsegmente vorgegeben werden können, die nicht immer genau zu der Wandstärke der entsprechenden Gebäudewand passen. Ferner müssen in der Fertigung die entsprechenden Ablängsegmente an der Zwischenspindel einerseits und dem Zwischenrohr andererseits mit hoher Genauigkeit und aufeinander abgestimmt angebracht werden.

Der vorliegenden Erfindung liegt das Problem zugrunde, eine Regulier- und Absperrarmatur der eingangs genannten Art im Hinblick auf eine bessere Belüftung der Armatur zur Vermeidung von Frostschäden anzugeben.

Zur Lösung des vorrrichtungsmäßigen Problems wird mit der vorliegenden Erfindung eine Regulier- und Absperrarmatur mit den Merkmalen von Anspruch 1 angegeben, die sich dadurch von der aus der DE-U-200 01 883 bekannten Armatur unterscheidet, dass ein mit der Spindel zusammenwirkendes Belüftungselement vorgesehen ist, das verschieblich in dem Ventilsitzgehäuse oder dem Ventilauslaufgehäuse angeordnet ist und spindelbetätigt von einer ersten Stellung in eine zweite Stellung axial verschieblich ist, wobei das Belüftungselement in der ersten Stellung die Belüftungsöffnung verschließt und in der zweiten Stellung, in der die Spindel gegen das Belüftungselement drückt, die Belüftungsöffnung freigibt.

Das Belüftungselement der erfindungsgemäßen Regulier-Armatur ist axial, d. h. in Längsrichtung der Spindel bzw. der Zwischenspindel verschieblich in einem verschieblich gelagerten Stellelement gehalten. Das Belüftungselement sitzt vorzugsweise koaxial zu der Spindel bzw. der Zwischenspindel, so dass bei einer Spindelbetätigung die Spindel unmittelbar oder mittelbar in axialer Richtung gegen das Belüftungselement drückt und dieses verschiebt. Vorzugsweise liegt das Belüftungselement unter Federvorspannung an und wird lediglich spindelbetätigt in die zweite, d. h. die Belüftungsöffnung freigebende Stellung bewegt. Das Belüftungselement befindet sich in dem Ventilsitzgehäuse bzw. dem Ventilauslaufgehäuse, d. h. radial innerhalb des jeweiligen Gehäuses und ist somit vor Manipulationen von außen geschützt. Insbesondere bei einer Anordnung des Belüftungselementes in dem Ventilsitzgehäuse kann vermieden werden, dass das Wasser innerhalb der Belüftungsöffnung bei extremen Temperaturen friert.

Weitere vorteilhafte Weiterbildungen der erfindungsgemäßen Regulier- und Absperrarmatur sind in den Ansprüchen 2 bis 17 angegeben.

Die vorliegende Erfindung wird nachfolgend anhand von Ausführungsbeispielen in Verbindung mit der Zeichnung näher erläutert. In dieser zeigen:
- Figur 1: eine Längsschnittansicht eines Ausführungsbeispiels einer Regulier- und Absperrarmatur zur Verdeutlichung der wesentlichen Teile derselben;
- Figur 2: das Ventilauslaufgehäuse des in Figur 1 gezeigten Ausführungsbeispiels (Detail B) in vergrößerter Darstellung bei geöffneter Armatur;
- Figur 3: das Ventilsitzgehäuse des in Figur 1 gezeigten Ausführungsbeispiels (Detail C) bei geöffneter Armatur;
- Figur 4: die Darstellung gemäß Figur 2 bei geschlossener Armatur;
- Figur 5: die Darstellung gemäß Figur 3 bei geschlossener Armatur;
- Figur 6: ein Ventilauslaufgehäuse gemäß Detail C in Figur 1 für ein weiteres Ausführungsbeispiel bei geöffneter Armatur;
- Figur 7: das in Figur 6 gezeigte Ausführungsbeispiel bei geschlossener Armatur;
- Figur 8: die von einer Gebäudewandung abstehenden Enden von Zwischenspindel und Zwischenrohr eines weiteren Ausführungsbeispiels einer erfindungsgemäßen Regulier- und Absperrarmatur vor dem Ablängen;
- Figur 9: das in Figur 8 gezeigte Ausführungsbeispiel nach der Endmontage;
- Figur 10: ein erstes spezielles Ausführungsbeispiel einer Spindelaufnahme eines Ventiloberteils (Einzelheit Z gemäß Figur 9);
- Figur 11: ein zweites spezielles Ausführungsbeispiel einer Spindelaufnahme eines Ventiloberteils und
- Figur 12: ein drittes Ausführungsbeispiel einer Spindelaufnahme eines Ventiloberteils.

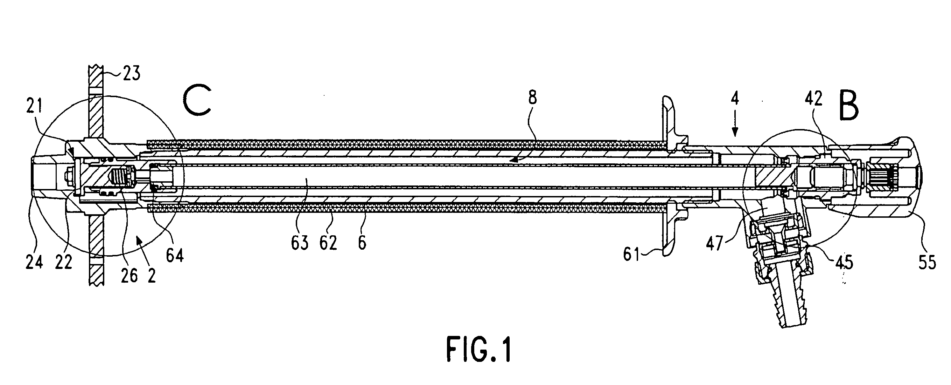

In Figur 1 sind die wesentlichen Bestandteile eines Ausführungsbeispiels einer als Wasserzapfstelle ausgebildeten Regulier- und Absperrarmatur gezeigt, die ein Ventilsitzgehäuse 2, ein Ventilauslaufgehäuse 4 und ein dazwischen angeordnetes, beide Gehäuse 2, 4 verdrehfest miteinander verbindendes Zwischenrohr 6 umfasst. An dem Ventilsitzgehäuse 2 ist ein Ventilsitz 21 ausgebildet, an welchen ein Ventilkegel 22 dichtend zur Anlage gebracht werden kann. Vorliegend erfolgt die Anlage nach Art eines Geradsitzventils. An der Außenumfangsfläche des Ventilsitzgehäuses 2 ist ein Befestigungsflansch 23 vorgesehen, welcher vorzugsweise an der Innenseite einer Gebäudewandung montiert wird. Befestigungsseitig weist das Ventilsitzgehäuse 2 ferner einen Einlaufstutzen 24 zum Anschluss an das Rohrleitungssystem des Gebäudes auf.

An der anderen Seite des Ventilsitzgehäuses 2 ist das Zwischenrohr 6 verdrehfest montiert, dessen Länge derart ist, dass eine Manschette 61 an der Außenwand einer fertigen Gebäudewand anliegt. Das Zwischenrohr 6 kann über seine gesamte Länge mit einer Isolierung 62 ummantelt sein. Vorliegend erstreckt sich die Isolierung 62 bis zu einer ringförmigen Anlagefläche der Manschette 61 an die Gebäudewand.

Zwischen der Zwischenspindel 63 und dem Zwischenrohr 6 ist ein Ringraum 8 ausgebildet, durch den Wasser in axialer Richtung durch die Armatur zu einem quer abgehenden und zu einem Rohrbelüfter 45 mit Schlauchtülle 46 führenden Auslasskanal 47 gelangen kann.

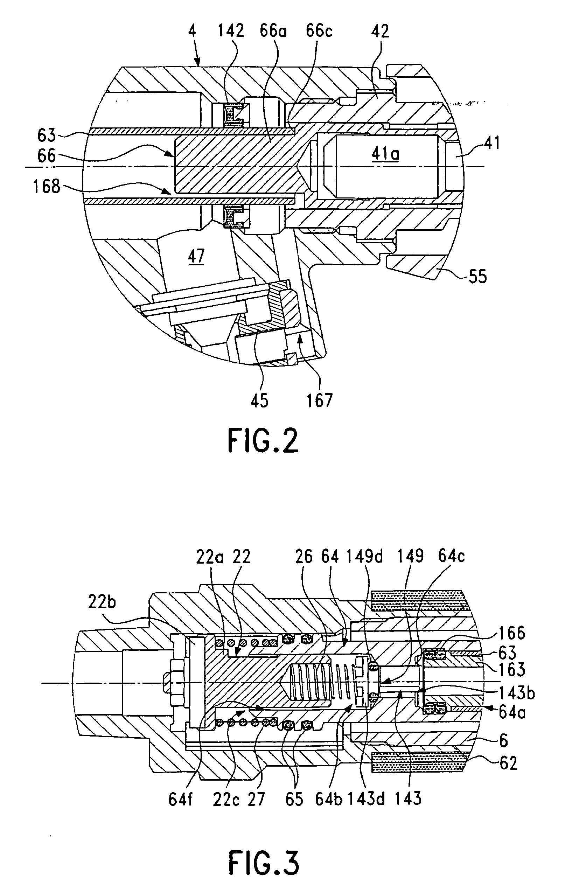

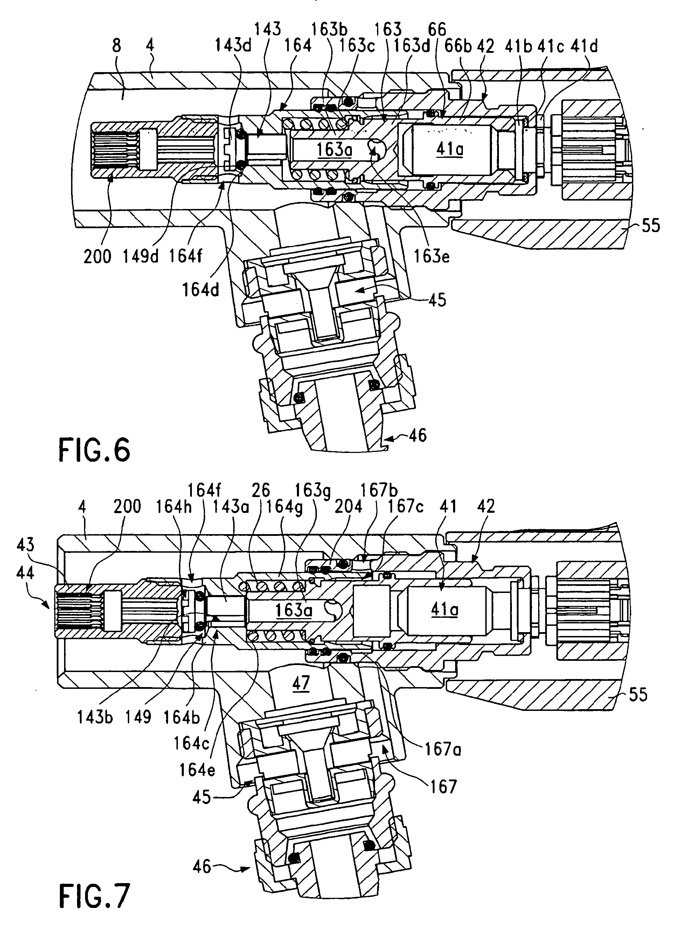

Bei dem in den Figuren 2 bis 5 gezeigten Ausführungsbeispiel ist die Zwischenspindel 63 als Hohlspindel ausgebildet und auslaufgehäuseseitig auf ein Kupplungsstück 66 aufgeschoben, welches hierzu einen auf den Innendurchmesser der Zwischenspindel 63 angepassten Zwischenspindelaufnahmekopf 66a aufweist, an dessen Umfangsfläche vorliegend eine Belüftungsnut 168 ausspart ist. Die Zwischenspindel 63 liegt stirnseitig gegen eine an dem Kupplungsstück 66 angeformte Kupplungsstückschulter 66c unter Vorspannung an Die Spindel 41 ist in einem Ventiloberteil 42 drehbar aufgenommen, welches in das Ventilauslaufgehäuse 4 eingeschraubt ist, und ist drehfest mit einem Drehgriff 55 verbunden. Die Spindel 41 weist einen Spindelkopf 41 a auf, der in an sich bekannter Weise mit einem Spindelgewinde versehen ist, welches in ein korrespondierend ausgebildetes Innengewinde eingreift, welches mit einem an dem Kupplungsstück 66 ausgebildeten, sich stirnseitig öffnenden Spindelaufnahmehülsenabschnitt 66b zusammenwirkt. An den Spindelkopf 41 a schließt sich ein Spindelbund 41 b (vergleiche Figur 6) an, der unter Zwischenlage eines Gleitringes 41 c zwischen sich und einem gegenüberliegenden äußeren Sprengring 41 d einen radial vorspringenden Anlagekranz 42b des Ventiloberteils 42 klemmt. Hierdurch ist die Spindel 41 axial jedoch frei drehbar in dem Ventiloberteil 42 gehalten.

Die hohle Zwischenspindel 63 durchragt einen Kontur-Dichtring 142, der sich zwischen dem Ventiloberteil 42 und dem Auslasskanal 47 bzw. dem Ringraum 8 befindet und der außenumfänglich dichtend an dem Ventilauslaufgehäuse 4 und innenumfänglich dichtend an der Zwischenspindel 63 anliegt. Dieser Kontur-Dichtring 142 wird durchsetzt von der Belüftungsnut 168, durch welche der Innenraum der hohlen Zwischenspindel 63 mit einem an dem Ventilauslaufgehäuse 4 ausgebildeten Lüftungskanal 167 kommuniziert. Der Belüftungskanal 167 verläuft bei dem gezeigten Ausführungsbeispiel parallel zu dem Auslasskanal 47, was den Vorteil mit sich bringt, dass beim Absperren der Regulier- und Absperrarmatur bei einem unter Druck stehenden, an die Schlauchtülle angeschlossenen Schlauch Wasser im Bereich der Schlauchtülle 46 aus der Armatur austreten kann.

An ihrem ventilsitzgehäuseseitigen Ende ist die hohle Zwischenspindel 63 längsverschieblich in einer Verbindungshülse 64 gehalten, die bei dem gezeigten Ausführungsbeispiel das Anspruchsmerkmal "Stellelement" ausbildet, welches axial verschieblich in der Armatur und auch axial verschieblich gegenüber der Spindel 41 geführt ist. Diese greift in eine zylindrische Kopfstückaufnahme 64a der Verbindungshülse 64 ein, die sich zu dem Auslaufgehäuse hin öffnet, und ist endseitig dichtend in ein rohrförmiges Kopfstück 163 eingesetzt, das an seiner Außenumfangsfläche ein O-Ringpaket 166 trägt, das in der Kopfstückaufnahme 64a dichtend anliegt.

Die Verbindungshülse 64 bildet an ihrem gegenüberliegenden Ende eine Ventilkegelaufnahmehülse 64b aus, in der ein Ventilkegelunterteil 22a, welches eine Dichtscheibe 22b des Ventilkegels 22 trägt, gleitverschieblich geführt ist. Das Ventilkegelunterteil 22a ist im Wesentlichen zapfenförmig ausgebildet und weist an seiner äußeren Umfangsfläche eine Ventilkegelunterteilnut 22c auf, durch welche der Ventilsitz 22 mit der Ventilkegelaufnahmehülse 64b kommuniziert. Das Ventilkegelunterteil 22a hat eine Bohrung, in der eine Feder 26 aufgenommen ist, die sich mit ihrem anderen Ende an einem Belüfterkegel 143 abstützt, der ein Ausführungsbeispiel für das Anspruchsmerkmal Belüftungselement darstellt und verschieblich in der Verbindungshülse 64 gelagert ist. Hierzu weist die Verbindungshülse 64 sich in axialer Richtung erstreckenden zylindrischen Führungsbereich 64c auf, der einen Belüftungskegelzapfen 143a des Belüfterkegels 143 umfänglich umgibt. Der Belüftungskegelzapfen 143a weist an seiner Außenumfangsfläche eine Kegelzapfennut 143b auf, die sich in axialer Richtung bis zu einem Dichtungselementsitz 143c des Belüftungskegels 143 erstreckt. Der Dichtungselementsitz 143c trägt ein Dichtungselement 149d in Form eines Dichtringes zur Abdichtung einer Belüftungsöffnung 149 und wird von einem Belüftungskegelteller 143d überragt. Gegen diesen Teller 143d stützt sich die Feder 26 ab. In der in Figur 3 gezeigten ersten, d. h. geschlossenen Stellung des Belüftungselementes 143 liegt der Dichtring 149d an einer durch das Stellelement 64 ausgebildeten Dichtanlagefläche 64d an, die zwischen der zylindrischen Wandung der Ventilkegelaufnahmehülse 64b und dem Führungsbereich 64c ausgeformt ist.

In der in Figur 3 gezeigten geöffneten Stellung der Armatur ist der Ventilkegel 22 gegen einen nicht dargestellten Anschlag der Verbindungshülse 64 unter Vorspannung der Feder 26 gegenüber der Verbindungshülse 64 in seiner Ausgangslage lagegesichert. Das Dichtungselement 149d wird durch die Vorspannung der Feder 26 und den Innendruck der Armatur dichtend gegen die Dichtanlagefläche 64d gedrückt. Die Belüftungsöffnung 149 ist geschlossen. Der Belüftungskegelzapfen 163a überragt eine den Führungsbereich 64c umgebende sich in radialer Richtung erstreckende ringförmige Anlagefläche 64e.

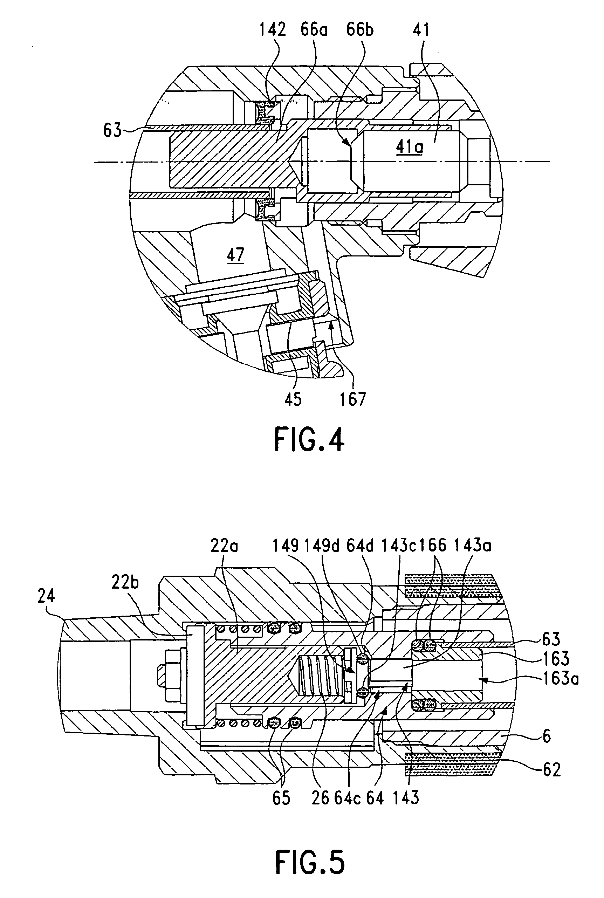

Wird nun das in den Figuren 2 bis 5 gezeigte Ausführungsbeispiel einer Regulier- und Absperrarmatur ausgehend von der in den Figuren 2 und 3 gezeigten geöffneten Stellung geschlossen (Figuren 4, 5), so ergibt sich Folgendes: Durch Drehung der Spindel 41 wird das Kopfstück 163 in Richtung auf das Ventilgehäuse 2 verschoben. Die an der Kupplungsstückschulter 66c anliegende Zwischenspindel 63 wird zwangsgeführt ebenfalls in Richtung auf das Ventilsitzgehäuse 2 verschoben. Die Zwischenspindel 63 drückt mit ihrem Kopfstück 61 gegen den Belüftungskegel 143, welcher wiederum aufgrund der Lagesicherung des Ventilkegels 22 gegenüber der Verbindungshülse 64 durch die Federkraft der Feder 26 und des Innendrucks der Armatur das Belüftungsventil 149 verschließt. Deren Rückstellkraft ist derart, dass der Belüftungskegel 143 auch dann an der Dichtanlagefläche 64d zunächst angelegt bleibt, wenn das Kopfstück 163 bei axialer Relativbewegung zwischen der Verbindungshülse 64 und dem Ventilsitzgehäuse 22 gegen den Belüftungskegelzapfen 143a drückt. Bei fortschreitendem Vorschub durch die Spindel 41 wird die Dichtscheibe 22b schließlich an den Ventilsitz 21 angelegt und eine zwischen der Dichtscheibe 22b und dem vorderen Ende der Verbindungshülse 64 angeordnete Rückstellfeder 27 wird zusammengepresst, bis schließlich das vorderste Ende der Verbindungshülse 64 gegen das Ventilkegelunterteil 22a anliegt.

Bei fortscheitender Drehbewegung der Spindel 41 wird schließlich die Zwischenspindel 63 relativ zu der Verbindungshülse 64 in Richtung auf den Ventilsitz 21 verschoben. Hierbei drückt das Kopfstück 163 gegen den Belüftungskegelzapfen 143a und verschiebt den Belüftungskegel 143 entgegen der Kraft der Feder 26. Dadurch wird die dichtende Anlage des Dichtringes 149d gegenüber der Dichtanlagefläche 64d aufgehoben. Die Belüftungsöffnung 149 wird geöffnet. Über den Belüftungskanal 167, die Belüftungsnut 168 und den Innenraum der Zwischenspindel 63, einen durch das Kopfstück 163 gebildeten Lüftungsdurchgang 163a, die Kegelzapfennut 143b und die Nut 22c des Ventilkegelunterteils 22b, welche einen zu dem Ringraum 8 führenden axialen Belüftungsdurchtritt ausbildet, kann nunmehr Luft in den Ringraum zwischen der Zwischenspindel 63 und dem Zwischenrohr 6 gelangen.

Diese belüftete Stellung der Armatur ist in den Figuren 4 und 5 zu sehen. In dem Ringraum 8 zwischen der Zwischenspindel 63 und dem Zwischenraum 6 enthaltenes Wasser kann nach Belüftung der Armatur abfließen. Selbst bei einem an die Schlauchtülle 64 unter Druck angeschlossenen Schlauch kann der in der Armatur bestehende Wasserdruck durch den Belüftungskanal 167 abgebaut werden.

Das in den Figuren 2 bis 5 gezeigte Ausführungsbeispiel hat den Vorteil, dass der ohnehin aus dem Stand der Technik bekannte und üblicherweise bei der gattungsbildenden Armatur verwirklichte Rückflussverhinderer, der dadurch gebildet ist, dass der Ventilkegel 22 durch die Feder 26 gegenüber der Verbindungshülse 64 unter Vorspannung der Rückstellfeder 27 an dem Ventilsitz 21 anliegt, zusätzlich auch der Zwangsentlüftung dient. Diese Zwangsentlüftung ist bei dem Ausführungsbeispiel zuverlässig auf solche Fälle beschränkt, bei denen das Ventil geschlossen ist. Eine Fehlfunktion kann daher ausgeschlossen werden. Darüber hinaus befindet sich die Belüftungsöffnung 149 in demjenigen Bereich der Regulier-Armatur, der frostsicher nahe des Gebäudeinneren angeordnet ist, so dass auch ein Einfrieren der im Bereich der Belüftungsöffnung 149 verhindert werden kann.

Bei dem in den Figuren 6 und 7 gezeigten Ausführungsbeispiel befindet sich das Belüftungselement 143 innerhalb des Ventilauslaufgehäuses 4. Gleiche Teile sind gegenüber dem vorher diskutierten Ausführungsbeispiel mit gleichen Bezugszeichen versehen.

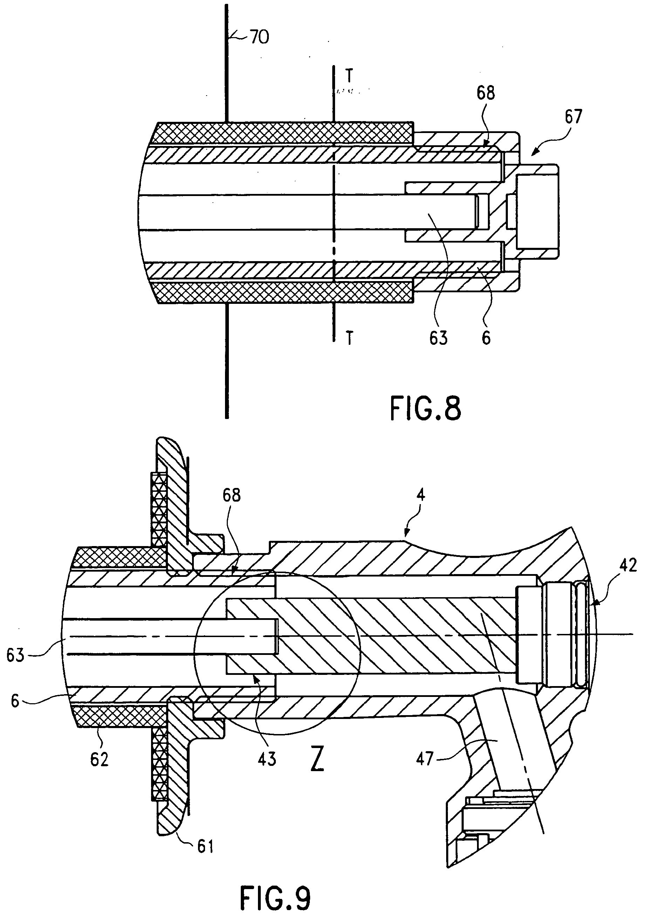

Das Stellelement ist auch bei diesem Ausführungsbeispiel durch eine Verbindungshülse 164 gebildet, deren mittlerer Bereich zur Aufnahme des Belüftungskegels 143 korrespondierend zu dem entsprechenden Bereich der Verbindungshülse 164 in dem vorher diskutierten Ausführungsbeispiel ausgebildet ist. Ventilsitzgehäuseseitig schließt sich ein zylindrischer Kegeltelleraufnahmeabschnitt 164h an, der von zwei zu dem Ringraum 8 führenden dem Belüftungskegelteller 143d vorgelagerten Belüftungsdurchtritten 164f durchsetzt ist. Weiter in Richtung auf den Ventilsitz 21 vorgelagert ist eine Verbindungshülse 200 angeschraubt, die an ihrem stirnseitigen Ende eine Zwischenspindelaufnahme 43 aufweist, deren Ausgestaltung in der Beschreibung zu dem Ausführungsbeispielen der Figuren 8 ff. noch näher erläutert wird. An eine Anlagefläche 164e schließt sich ein Buchsenabschnitt 164g der Verbindungshülse 164 an, der mit seiner zylindrischen Außenumfangsfläche dichtend und axial verschieblich in einer Buchse 204 gehalten ist, die wiederum ortsfest und dichtend in das Ventilauslaufgehäuse 4 eingesetzt ist. Der Buchsenabschnitt 164g nimmt in sich einen Rohrabschnitt 163b auf, der einstückig an dem Kopfstück 163 angeformt ist und in seiner Mitte den Lüftungsdurchgang 163a ausbildet. Der Rohrabschnitt 163b geht über eine Ringfläche 163c in einen Zylinderabschnitt 163d, der in seinem hinteren Teil den Spindelaufnahmehülsenabschnitt 66b ausformt, über. An dem Zylinderabschnitt 163d ist außenumfänglich eine keilförmige Nut ausgebildet, in der ein Sprengring sitzt, durch welchen die axiale Verschiebung des Kupplungsstücks 66 relativ zu dem Stellelement 164 begrenzt wird. Zwischen der Ringfläche 163c und der Anlagefläche 164e befindet sich eine Feder 26, die das Kupplungsstück 66 aus dem Zylinderabschnitt 164g drängt und so das Kopfstück 163 mit dem einteilig daran angeformten Kupplungsstück 66 von dem Belüftungskegel 143 beabstandet.

Bei dem gezeigten Ausführungsbeispiel ist die Buchse 204 einteilig an den Ventiloberteil 42 angeformt, wobei zwischen beiden Bereichen 204, 42 eine zu dem Belüftungskanal 167 führende Querbohrung 163e ausgespart ist. Die Buchse 204 kann aber auch als separates Bauteil in das Ventilauslaufgehäuse 4 eingebaut sein.

Die Figur 6 zeigt die Absperrarmatur in geöffneter Stellung. Wird ausgehend von dieser geöffneten Stellung an dem Drehgriff 55 gedreht, so wandert das Kupplungsstück 66 in Richtung auf das Ventilsitzgehäuse 2 und entgegen der Kraft der Feder 26. Deren Federkraft ist dabei so eingestellt, dass zunächst keine Relativbewegung zwischen dem Kupplungsstück 66 und dem Stellelement 164 stattfindet und sich die Zwischenspindel 63 und der Ventilkegel 22 dem Ventilsitzgehäuse 2 nähern. Die Dichtscheibe 22b kommt schließlich zur Anlage an dem Ventilsitz 21. Bei fortschreitender axialer Bewegung des Kupplungsstücks 66 wird die Feder 26 komprimiert und die vordere Stirnseite des Rohrabschnitts 163b wird schließlich gegen das die Anlagefläche 164e überragende Ende des Belüftungskegelzapfen 143a gedrückt. Es ergibt sich eine Relativbewegung des Belüftungskegels 143 zu dem Stellelement 164, in Folge dessen die Belüftungsöffnung 149 freigegeben wird, so dass Luft durch den Belüftungskanal 167 und in einen Ringspalt 167a zwischen Auslaufsgehäuse 4 und Ventiloberteil 42 und durch eine Querbohrung 167b von dort in einen Ringspalt 8 zwischen dem Buchsenabschnitt 164g und dem Zylinderabschnitt 163d und von dort in die in dem Zylinderabschnitt 163d ausgeformte und zu dem Belüftungsdurchgang 163a führende Querbohrung 163e gelangen kann. Von dort gelangt die Luft über die Kegelzapfennut 143b und die Belüftungsdurchtritte 164f zu dem Ringspalt 8, so dass das gesamte in dem Ringspalt 8 befindliche Wasser abfließen kann.

Beim Öffnen der Armatur fließt Wasser durch die Belüftungsdurchtritte 164f und trifft dort auf den Belüftungskegelteller143d, der auch in der geöffneten Stellung des Belüftungskegels 143 den Belüftungsdurchtritten 164f in Strömungsrichtung nachgeordnet ist. Dementsprechend wird der Belüftungskegel bei dem gezeigten Ausführungsbeispiel allein aufgrund der Druckdifferenz des Wassers in die geschlossenen Stellung zurückgedrängt; eine gesonderte Feder ist - im Gegensatz zu dem vorher diskutierten Ausführungsbeispiel - nicht erforderlich.

Nachstehend wird ein Verfahren zur Endmontage des in den Figuren 6 und 7 gezeigten Ausführungsbeispiels der Regulier- und Absperrarmatur unter Bezugnahme auf die Figuren 8 ff. näher erläutert.

Bei der Montage einer solchen Regulier- und Absperrarmatur wird zunächst das Ventilsitzgehäuse 2 an eine im Gebäudeinnern liegende Innenwand angeschlagen. Das Zwischenrohr 6 und die Zwischenspindel 63 werden durch eine in der Gebäudewand 70 ausgesparte Maueröffnung nach außen geführt und überragen die Gebäudewand 70, wie beispielhaft in Figur 8 dargestellt.

Nunmehr wird von einem Monteur vor Ort die Isolierung 62 bündig mit der Hauswand abgeschnitten und das Zwischenrohr 6 wie auch die Zwischenspindel 63 mittels Schablone an gleicher Stelle durchtrennt, die in Figur 8 beispielhaft anhand der strichpunktierten Linie T-T angedeutet ist. Eine eventuell das vordere, freie Ende der Armatur verschließende Frostschutzkappe 67 kann hierbei am Ort verbleiben und die Zwischenspindel 63 in Position halten. Die Frostschutz- bzw. Bauschutzkappe 67 ist dabei vorzugsweise herstellerseits so auf das Zwischenrohr 6 und die Zwischenspindel 63 abgestimmt, dass die Zwischenspindel 63 axial durch den Ventilsitz 21 fixiert ist. Die Bauschutzkappe 67 drückt dementsprechend den Ventilkegel 22 gegen den Ventilsitz 21. Die zum Einsatz kommende Schablone wird vorzugsweise durch einen geschlitzten Zylinder gebildet. Der Schlitz hat eine solche Abmessung, dass die Schablone von der Außenumfangsfläche des überstehenden Längenabschnitts aufgebracht werden kann. Das an der Außenumfangsfläche des Zwischenrohres 6 herstellerseits vorgesehene Außengewinde 68 hat eine hinreichende Länge und befindet sich nach dem Ablängen weiterhin an dem vorspringenden Längenabschnitt. Die Isolierung 62 wird im Wesentlichen bis auf die Oberfläche der Gebäudewand 70 zurückgeschnitten. Die Manschette 61 wird auf das Zwischenrohr 6 aufgeschoben oder aufgeschraubt. Danach wird das Ventilauslaufgehäuse 4 auf das Außengewinde 68 aufgeschraubt.

Danach wird das Ventiloberteil 42 in das Ventilauslaufgehäuse 4 eingesetzt. Die Zwischenspindelaufnahme 43 weist eine im Wesentlichen an den Durchmesser der Zwischenspindel 63 angepasste Bohrung 44 auf, die vorzugsweise an ihrer Mündung zur Zentrierung der Zwischenspindel 63 angefasst ist. Zusätzlich kann auch die Zwischenspindel 63 im Bereich ihres freien Endes durch Zentriermittel konzentrisch in dem Zwischenrohr 6 gehalten sein. Beim Einsetzen des Ventiloberteils 42 in das Auslaufgehäuse 4 tritt dementsprechend das vordere Ende der Zwischenspindel 63 in die Bohrung 44 ein. Das Ventiloberteil 42 wird nunmehr vollständig in das Ventilauslaufgehäuse 4 eingeschraubt. Hierbei kann es zu einer weiteren axialen Verschiebung zwischen der Zwischenspindel 63 und der Zwischenspindelaufnahme 43 des Ventiloberteils 42 kommen.

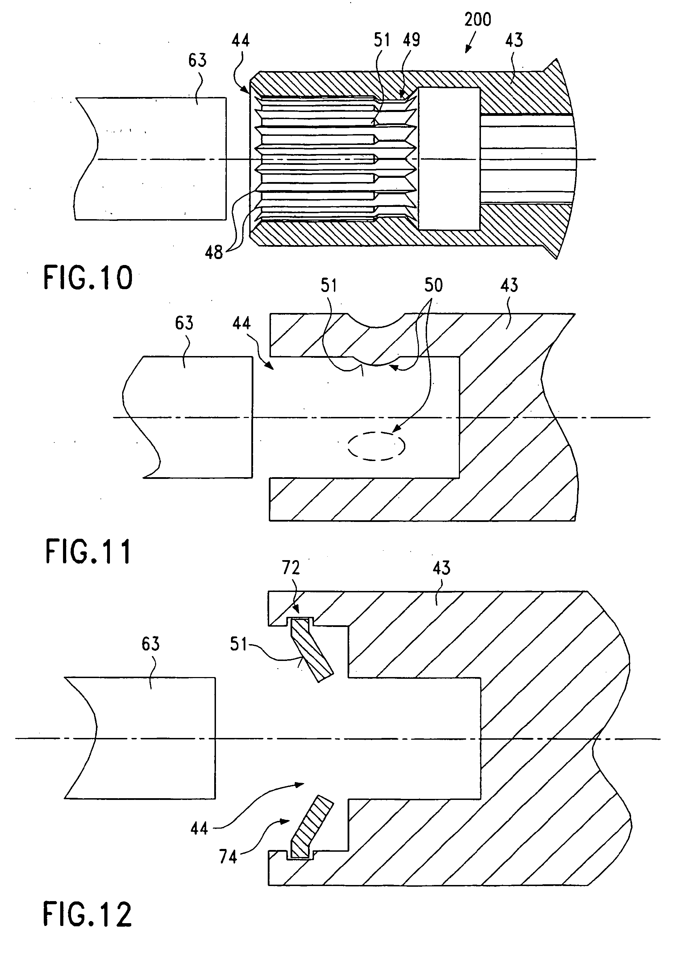

Nachdem das Ventiloberteil 42 seine Endposition erreicht hat, wird nunmehr durch Betätigen des Drehgriffs 55 die Armatur abgesperrt. Hierbei wird zunächst die Rückstellfeder 27 des Rückschlagventils komprimiert. Schließlich stößt die freie Stirnseite der Verbindungshülse 164 des Rückschlagventils gegen eine Gegenfläche des Ventilkegels 22, der wiederum sich an dem Ventilsitz 21 und somit an dem Ventilsitzgehäuse 2 abstützt. Die so festgelegte Zwischenspindel 63 wird im Rahmen der weiteren Absperrbewegung tiefer in die Bohrung 44 der Zwischenspindelaufnahme 43 eingeschoben und hierbei axial festgelegt, und zwar vorzugsweise mit Mitteln, die näher in den Figuren 10 und 12 dargestellt sind.

Bei dem in Figur 10 gezeigten Ausführungsbeispiel einer Zwischenspindelaufnahme 43 weist die Bohrung 44 einen Durchmesser auf, der wenig größer als der Durchmesser der Zwischenspindel 63 ist und an deren inneren Umfang ein Vielzahn mit einer Vielzahl von auf dem Umfang verteilt angeordneten Radialrippen 48 ausgebildet ist. Im mündungsnahen Bereich sind die Radialrippen 48 so auf den Außendurchmesser der Zwischenspindel 63 abgestimmt, dass diese von Hand, d.h. ohne maschinelle oder werkzeugmäßige Unterstützung in diesem vorderen Bereich der Bohrung eingeschoben werden kann. Hinter diesem vorderen Bereich der Bohrung 44 befindet sich eine die gesamte Bohrung konzentrisch verringernde Verjüngung 49, wobei sich die Radialrippen 48 bis zu der Verjüngung 49 hin fortsetzen.

Bei dem in Figur 11 gezeigten Ausführungsbeispiel weist die Bohrung 44 mehrere an dem Innenumfang der Bohrung 44 verteilt ausgebildete Verjüngungen in Form von Umformnasen 50 auf, die durch Umformbearbeitung der Außenumfangsfläche der Zwischenspindelaufnahme 43 hergestellt worden sind. In Figur 11 ist eine dieser Umformnasen 50 von der Schnittdarstellung erfasst.

Beim Fügen der in den Figuren 10 und 11 gezeigten Teile, beispielsweise beim manuellen Fügen von Zwischenspindel 63 und Ventiloberteil 42 vor dem Einsetzen des Ventiloberteils 42 in die Armatur, wird zunächst die Zwischenspindel 63 bis zu der Verjüngung 49 in die Bohrung 44 eingeschoben. Danach wird die Zwischenspindel 63 zusammen mit dem Ventiloberteil 42 in die Armatur eingeschoben. Das Ventiloberteil 42 wird in das Ventilauslaufgehäuse 4 bei geöffnetem Ventil eingeschraubt. Nachdem dieser Montageschritt beendet worden ist, sperrt der Monteur die Armatur ab, wodurch zunächst der Ventilkegel 22 gegen den Ventilsitz 21 gedrückt, danach die Verbindungshülse 164 gegen den Ventilkegel 22 angelegt wird und schließlich das vordere Ende der Zwischenspindel 63 tiefer in die Bohrung 44 eingedrückt wird. Hierbei drückt das stirnseitige Ende der Zwischenspindel 63 gegen eine oder mehrere durch die Verjüngung 49 ausgebildete Anlauframpen 51 und wird dort unter plastischer Verformung zwischen der Verjüngung 49 und der Zwischenspindel 63 dauerhaft in axialer Richtung fixiert. Die Zwischenspindel ist nunmehr in Bezug auf das Ventiloberteil unverlierbar und dauerhaft zuverlässig fixiert und gesichert.

Bei dem in Figur 12 gezeigten Ausführungsbeispiel weist die Zwischenspindelaufnahme 43 einen gegenüber dem Durchmesser der Zwischenspindel 63 deutlich im Innendurchmesser vergrößerten Eingangsbereich auf, in dem eine umlaufende Nut 72 zur Aufnahme eines Sicherungsrings 74 ausgespart ist, dessen radial innerer Bereich zur Ausbildung einer Anlauframpe 51 abgeschrägt ausgebildet ist, jedenfalls aber beim Einschieben der Zwischenspindel 63 in die Zwischenspindelaufnahme 43 durch Verformung eine solche Anlauframpe 51 ausbildet. In Einschieberichtung der Zwischenspindel 63 befindet sich hinter dem Sicherungsring 74 eine Bohrung 44, deren Durchmesser in etwa dem Außendurchmesser der Zwischenspindel 63 entspricht.

Bei dem in Figur 12 gezeigten Ausführungsbeispiel wird zunächst beim Einschieben der Zwischenspindel 63 in die Zwischenspindelaufnahme 43 der Sicherungsring 74 in axialer Richtung elastisch gebogen, bis schließlich die Zwischenspindel 63 den Sicherungsring 74 passieren kann. Durch die hierbei gebildete Anlauframpe 51 wird die Zwischenspindel 63 mit Rücksicht auf die Bohrung 44 fixiert und bei fortschreitender Einschiebebewegung in diese eingebracht. Die radial inneren Kanten des Sicherungsringes 74, der vorzugsweise aus Edelstahl gebildet ist, verkrallen sich hierbei an der vorzugsweise aus Messing gebildeten Zwischenspindel 63. Die Zwischenspindel 63 stößt mit ihrer Stirnseite gegen den Grund der Bohrung 44. In dieser Position ist die Zwischenspindel 63 in der Zwischenspindelaufnahme 43 unverlierbar fixiert.

### Bezugszeichenliste

- 2: Ventilsitzgehäuse
- 4: Ventilauslaufgehäuse
- 6: Zwischenrohr
- 8: Ringraum
- 21: Ventilsitz
- 22: Ventilkegel
- 22a: Ventilkegelunterteil
- 22b: Dichtscheibe
- 22c: Ventilkegelunterteilnut
- 23: Befestigungsflansch
- 24: Einlaufstutzen
- 26: Feder
- 27: Rückstellfeder
- 41: Spindel
- 41 a: Spindelkopf
- 41 b: Spindelbund
- 41 c: Gleitring
- 41 d: Sprengring
- 42: Ventiloberteil
- 42b: Anlagekranz
- 43: Zwischenspindelaufnahme
- 44: Bohrung
- 45: Rohrbelüfter
- 46: Schlauchtülle
- 47: Auslasskanal
- 48: Radialrippe
- 49: Verjüngung
- 50: Umformnase
- 51: Anlauframpe
- 55: Drehgriff
- 61: Manschette
- 62: Isolierung
- 63: Zwischenspindel
- 64: Verbindungshülse/Stellelement
- 64a: Kopfstückaufnahme
- 64b: Ventilkegelaufnahmehülse
- 64c: Führungsbereich/Zylinderabschnitt
- 64d: Dichtanlagefläche
- 64e: Anlagefläche
- 64f: Belüftungsdurchtritt
- 65: Dichtring
- 66: Kupplungsstück
- 66a: Zwischenspindelaufnahmekopf
- 66b: Spindelaufnahmehülsenabschnitt
- 66c: Kupplungsstückschulter
- 67: Frostschutzkappe
- 68: Außengewinde
- 70: Gebäudewand
- 72: Nut
- 74: Sicherungsring
- 142: Kontur-Dichtring
- 143: Belüftungskegel
- 143a: Belüftungskegelzapfen
- 143b: Kegelzapfennut
- 143c: Dichtungselementsitz
- 143d: Belüftungskegelteller
- 149: Belüftungsöffnung
- 149d: Dichtring
- 163: Kopfstück
- 163a: Belüftungsdurchgang
- 163b: Rohrabschnitt
- 163c: Ringfläche
- 163d: Zylinderabschnitt
- 163e: Radialbohrung
- 164: Verbindungshülse/Stellelement in Ausführungsbeispiel der Figuren 6 und 7
- 164a: Kopfstückaufnahme
- 164b: Ventilkegelaufnahmehülse
- 164c: Führungsbereich/Zylinderabschnitt
- 164d: Dichtanlagefläche
- 164e: Anlagefläche
- 164f: Belüftungsdurchtritt
- 164g: Buchsenabschnitt
- 164h: Kegeltelleraufnahmeabschnitt
- 166: O-Ringpaket
- 167: Belüftungskanal
- 167a: Ringspalt zwischen 42 und 164g
- 167b: Querbohrung in 42
- 167c: Ringspalt zwischen 164g und 163d
- 168: Belüftungsnut
- 200: Verbindungshülse
- 204: Buchse

## Patentansprüche

1. Regulier- und Absperrarmatur mit
einem Ventilsitzgehäuse (2), in dem ein Ventilkegel (22) verschieblich geführt und dichtend an einen an dem Ventilsitzgehäuse (2) ausgebildeten Ventilsitz (21) zur Anlage bringbar ist,
einem Ventilauslaufgehäuse (4), in das ein Ventiloberteil (42) mit einer drehbar in diesem angeordneten und mit einem Drehgriff (55) verbundenen Spindel (41) eingebaut ist,
mit einem zwischen dem Ventilsitzgehäuse (2) und dem Ventilauslaufgehäuse (4) montierten Zwischenrohr (6), das derart bemessen ist, dass das Ventilsitzgehäuse (2) im Innenbereich eines Gebäudes und das Ventilauslaufgehäuse (4) die Außenwand des Gebäudes überragend angeordnet ist und welches eine mit der Spindel (41) im Eingriff stehende, axial verstellbare Zwischenspindel (63) umgibt, die den Ventilkegel (22) stellt, sowie
einem Belüftungsventil, welches eine Belüftungsöffnung (149) bei geschlossenem Ventilkegel (22) freigibt,
**gekennzeichnet durch**
ein mit der Spindel (41) zusammenwirkendes Belüftungselement (143), das verschieblich in dem Ventilsitzgehäuse (2) oder dem Ventilauslaufgehäuse (4) angeordnet ist und spindelbetätigt von einer ersten Stellung in eine zweite Stellung axial verschieblich ist, wobei das Belüftungselement (143) in der ersten Stellung die Belüftungsöffnung (149) verschließt und in der zweiten Stellung, in der die Spindel gegen das Belüftungselement (143) drückt, die Belüftungsöffnung (149) freigibt, und wobei das Belüftungselement (143) axial verschieblich in einem verschieblich in dem Ventilsitzgehäuse (2) oder dem Ventilauslaufgehäuse (4) gelagerten und zwischen dem Ventilkegel (22) und der Spindel (41) angeordneten Stellelement (64; 66; 164) gehalten ist.

2. Regulier- und Absperraramatur nach Anspruch 1, **dadurch gekennzeichnet, dass** das Belüftungselement (143) in der ersten Stellung federvorgespannt gegen das Stellelement (64) anliegt.

3. Regulier- und Absperraramatur nach einem der vorherigen Ansprüche, **dadurch gekennzeichnet, dass** das Belüftungselement als Belüftungskegel (143) mit einem verschieblich an dem Stellelement (64; 66; 164) geführten Belüftungskegelzapfen (143a) und eine diesem in Richtung auf das Ventilsitzgehäuse (2) vorgelagerten Belüftungskegelteller (143d) ausgebildet ist und dass in dem Stellelement (64; 66; 164) ein den Belüftungskegelzapfen (143a) aufnehmender Führungsbereich (64c; 164c) ausgespart ist, der ventilsitzgehäuseseits von einer an dem Stellelement (64; 164) ausgebildeten Dichtanlagefläche (64d; 164d) abgeht und an seinem gegenüberliegenden Ende von einer ringförmigen Anlagefläche (64e; 164e) umgeben ist.

4. Regulier- und Absperrarmatur nach einem der vorherigen Ansprüche, **dadurch gekennzeichnet, dass** der Belüftungskegelzapfen (143a) die Anlagefläche (64e; 164e) in der ersten Stellung überragt und in der zweiten Stellung ein Kopfelement (163) an der Anlagefläche (64e; 164e) und gegen den Belüftungskegelzapfen (143a) anliegt und ein an dem Kopfelement (163) ausgesparter Lüftungsdurchgang (163a) mit dem Führungsbereich (64c; 164c) kommuniziert.

5. Regulier- und Absperraramatur nach einem der vorherigen Ansprüche, **dadurch gekennzeichnet, dass** die Zwischenspindel (63) als Hohlspindel ausgebildet ist.

6. Regulier- und Absperraramatur nach Anspruch 5, **dadurch gekennzeichnet, dass** die Zwischenspindel (63) zwischen der Spindel (41) und dem Kopfelement (163) angeordnet ist.

7. Regulier- und Absperraramatur nach einem der vorherigen Ansprüche, **dadurch gekennzeichnet, dass** das Kopfelement (163) als Teil eines mit der Spindel (41) im Gewindeeingriff stehenden und verdrehfest in dem Ventilauslaufgehäuse (4) gehaltenen Kupplungsstücks (66) ausgebildet ist.

8. Regulier- und Absperraramatur nach einem der vorherigen Ansprüche, **dadurch gekennzeichnet, dass** das Kopfelement (163) verschieblich in dem Ventilauslaufgehäuse (4) aufgenommen ist.

9. Regulier- und Absperraramatur nach Anspruch 7, **dadurch gekennzeichnet, dass** das Stellelement (164) an dem auslaufseitigen Ende der Zwischenspindel (63) angeordnet ist und einen das Kopfelement (163) aufnehmenden Buchsenabschnitt (164g) umfasst, der dichtend und verschieblich in dem Ventilauslaufgehäuse (4) gelagert ist.

10. Regulier- und Absperrarmatur nach Anspruch 9, **dadurch gekennzeichnet, dass** der Buchsenabschnitt (64g) dichtend in einer in das Ventilauslaufgehäuse (4) dichtend eingesetzten Buchse (204) axial geführt ist.

11. Regulier- und Absperrarmatur nach Anspruch 9, **dadurch gekennzeichnet, dass** die Buchse (204) einteilig mit dem Ventiloberteil (42) ausgebildet ist.

12. Regulier- und Absperrarmatur nach einem der vorherigen Ansprüche, **dadurch gekennzeichnet, dass** das Stellelement (16; 164) einen der Dichtanlagefläche (146d; 164d) vorgelagerten und den Belüftungskegelteller (143d) aufnehmenden Kegeltelleraufnahmeabschnitt (164h) umfasst, der mit wenigstens einem zu einem zwischen der Zwischenspindel (63) und dem Zwischenrohr (6) vorgesehenen Ringraum (8) führenden Belüftungsdurchtritt (64f; 164f) kommuniziert.

13. Regulier- und Absperrarmatur nach einem Anspruch 11, **dadurch gekennzeichnet, dass** der Belüftungsdurchtritt (64f; 164f) auch in der geöffneten Stellung des Belüftungselementes (143) dem Belüftungselement (143) in Richtung auf den Ventilsitz (21) vorgelagert ist.

14. Regulier- und Absperrarmatur nach einem der vorherigen Ansprüche, **dadurch gekennzeichnet, dass** das Kopfelement (163) einen an dem Belüftungskegelzapfen (143a) stirnseitig zur Anlage bringbaren Rohrabschnitt (163b) umfasst, der zwischen sich und dem Stellelement (164) einen eine auf das Kopfelement (163) wirkende und sich an dem Stellelement (164) abstützende Feder (26) aufnehmenden und von dem Buchsenabschnitt (64g) umgebenen Ringraum ausbildet und dass der von dem Rohrabschnitt (163b) ausgebildete Lüftungsdurchgang (163a) durch das Kopfelement (163) radial nach außen geführt ist und mit der Umgebung kommuniziert.

15. Regulier- und Absperraramatur nach einem der vorherigen Ansprüche, **gekennzeichnet durch** wenigstens eine sich radial verjüngende, an dem ventilsitzgehäuseseitigen Ende des Stellelementes (64) vorgesehene Zwischenspindelaufnahme (43), die eine Anlauframpe (51) zur kraftschlüssigen Fixierung der Zwischenspindel (63) ausbildet.

16. Regulier- und Absperrarmatur nach Anspruch 15, **dadurch gekennzeichnet, dass** die Zwischenspindelaufnahme (43) eine Bohrung (44) hat, deren Durchmesser größer als der Durchmesser der Zwischenspindel (63) ist, und dass die Bohrung (44) mit axialem Abstand von der Bohrungsmündung eine Verjüngung (49) aufweist.

17. Regulier- und Absperrarmatur nach einem der Ansprüche 15 oder 16, **dadurch gekennzeichnet, dass** wenigstens eine Verjüngung (49) der Bohrung (44) durch Umformbearbeitung der Außenfläche der Zwischenspindelaufnahme (43) hergestellt ist.

## Claims

1. Regulating and shut-off valve having a valve seat housing (2), in which a valve cone (22) is displaceably guided and can be brought sealingly into contact with a valve seat (21) formed on the valve seat housing (2),
a valve outlet housing (4), into which is built a valve top section (42) with a spindle (41) rotatably arranged therein and connected to a rotary handle (55), with an intermediate tube (6) mounted between the valve seat housing (2) and the valve outlet housing (4), which is dimensioned in such a manner that the valve seat housing (2) is arranged in the internal area of a building and the valve outlet housing (4) is arranged protruding over the external wall of the building and which surrounds an axially adjustable intermediate spindle (63), engaging with the spindle (41), which adjusts the valve cone (22), as well as
a ventilating valve, which opens a ventilation opening (149) when the valve cone (22) is closed,
**characterised by** a ventilation element (143) cooperating with the spindle (41), which is slidably arranged in the valve seat housing (2) or the valve outlet housing (4) and is axially displaceable, actuated by the spindle, from a first position into a second position, wherein the ventilation element (143) in the first position closes the ventilation opening (149) and in the second position, in which the spindle presses against the ventilation element (143), opens the ventilation opening (149), and wherein the ventilation element (143) is axially displaceably held in an adjusting element (64; 66; 164) slidably mounted in the valve seat housing (2) or the valve outlet housing (4) and arranged between the valve cone (22) and the spindle (41).

2. Regulating and shut-off valve according to claim 1, **characterised in that** the ventilation element (143) fits in the first position, pre-tensioned by a spring, against the adjusting element (64).

3. Regulating and shut-off valve according to any one of the preceding claims, **characterised in that** the ventilation element is formed as ventilation cone (143) with a ventilation cone journal (143a) displaceably guided on the adjusting element (64; 66; 164) and a ventilation cone plate (143d) mounted in front of this in the direction of the valve seat housing (2) and **in that** a guide area (64c; 164c), receiving the ventilation cone point (143a), is left open in the adjusting element (64; 66; 164), which on the valve seat housing side departs from a sealing contact surface (64d; 164d) formed on the adjusting element (64; 164) and on its opposite end is surrounded by a circular contact surface (64e; 164e).

4. Regulating and shut-off valve according to any one of the preceding claims, **characterised in that** the ventilation cone journal (143a) protrudes over the contact surface (64e; 164e) in the first position and in the second position a head element (163) fits on the contact surface (64e; 164e) and against the ventilation cone point (143a) and a ventilation passage (163a), left open at the head element (163) communicates with the guide area (64c; 164c).

5. Regulating and shut-off valve according to any one of the preceding claims, **characterised in that** the intermediate spindle (63) is designed as a hollow spindle.

6. Regulating and shut-off valve according to claim 5, **characterised in that** the intermediate spindle (63) is arranged between the spindle (41) and the head element (163).

7. Regulating and shut-off valve according to any one of the preceding claims, **characterised in that** the head element (163) is designed as part of a coupling piece (66) in threaded engagement with the spindle (41) and non-rotationally held in the valve outlet housing (4).

8. Regulating and shut-off valve according to any one of the preceding claims, **characterised in that** the head element (163) is slidably received in the valve outlet housing (4).

9. Regulating and shut-off valve according to claim 7, **characterised in that** the adjusting element (164) is arranged on the outlet-side end of the intermediate spindle (63) and comprises a connector section (164g) receiving the head element (163), which is mounted slidably and sealingly into the valve outlet housing (4).

10. Regulating and shut-off valve according to claim 9, **characterised in that** the connector section (64g) is guided axially and sealingly into a connector (204) inserted sealingly into the valve outlet housing (4).

11. Regulating and shut-off valve according to claim 9, **characterised in that** the connector (204) is designed in one piece with the valve top section (42).

12. Regulating and shut-off valve according to any one of the preceding claims, **characterised in that** the adjusting element (16; 164) comprises a cone plate receiving section (164h) mounted in front of the sealing contact surface (146d; 164d) and receiving the ventilation cone plate (143d), which communicates with at least one ventilation through-passage (64f; 164f) leading to an annular space (8) provided between the intermediate spindle (63) and the intermediate tube (6).

13. Regulating and shut-off valve according to a claim 11, **characterised in that** the ventilation through-passage (64f; 164f), also in the opened position of the ventilation element (143), is mounted in front of the ventilation element (143) in the direction of the valve seat (21).

14. Regulating and shut-off valve according to any one of the preceding claims, **characterised in that** the head element (163) comprises a tube section (163b), which can be brought into contact with the ventilation cone point at the front (143a), which between itself and the adjusting element (164) forms an annular space receiving a spring (26) acting on the head element (163) and supported on the adjusting element (164) and surrounded by the connector section (64g) and **in that** the ventilation through-passage (163a), formed by the tube section (163b), is radially outwardly guided through the head element (163) and communicates with the environment.

15. Regulating and shut-off valve according to any one of the preceding claims, **characterised by** at least one radially tapering intermediate spindle holder (43), provided on the valve seat housing side end of the adjusting element (64), which forms a run-on ramp (51) for non-positive fixing of the intermediate spindle (63).

16. Regulating and shut-off valve according to claim 15, **characterised in that** the intermediate spindle holder (43) has a borehole (44), whose diameter is greater than the diameter of the intermediate spindle (63), and **in that** the borehole (44) has a tapering (49) at an axial distance from the mouth of the borehole.

17. Regulating and shut-off valve according to any one of claims 15 or 16, **characterised in that** at least one tapering (49) of the borehole (44) is produced by forming processing the outer surface of the intermediate spindle holder (43).

## Revendications

1. Robinetterie de régulation et d'arrêt avec
une enveloppe de siège de soupape (2) dans laquelle un cône de soupape (22) est guidé mobile et est apte à être appliqué de manière étanche contre un siège de soupape (21) formé sur l'enveloppe de siège de soupape (2),
une enveloppe de sortie de soupape (4) dans laquelle est montée une partie supérieure de soupape (42) avec une tige (41) disposée en rotation dans celle-ci et reliée à une poignée tournante (55),
un tube intermédiaire (6) qui est monté entre l'enveloppe de siège de soupape (2) et l'enveloppe de sortie de soupape (4), qui est dimensionné de telle sorte que ladite enveloppe de siège de soupape (2) soit disposée dans la zone intérieure d'un bâtiment et que l'enveloppe de sortie de soupape (4) dépasse du mur extérieur du bâtiment, et qui entoure une tige intermédiaire (63) qui est en prise avec la tige (41), qui est réglable axialement et qui règle le cône de soupape (22), et
une soupape d'aération qui dégage une ouverture d'aération (149), quand le cône de soupape (22) est fermé,
**caractérisée par** un élément d'aération (143) qui coopère avec la tige (41), qui est disposé mobile dans l'enveloppe de siège de soupape (2) ou dans l'enveloppe de sortie de soupape (4) et qui est mobile axialement, actionné par une tige, d'une première position jusqu'à une seconde position, étant précisé que l'élément d'aération (143), dans sa première position, ferme l'ouverture d'aération (149) et, dans sa seconde position, dans laquelle la tige appuie contre l'élément d'aération (143), dégage ladite ouverture d'aération (149), et que l'élément d'aération (143) est maintenu mobile axialement dans un élément de réglage (64 ; 66, 164) qui est monté mobile dans l'enveloppe de siège de soupape (2) ou dans l'enveloppe de sortie de soupape (4) et qui est disposé entre le cône de soupape (22) et la tige (41).

2. Robinetterie de régulation ou d'arrêt selon la revendication 1, **caractérisée en ce que** l'élément d'aération (143), dans sa première position, est appliqué par une contrainte élastique contre l'élément de réglage (64).

3. Robinetterie de régulation ou d'arrêt selon l'une des revendications précédentes, **caractérisée en ce que** l'élément d'aération est conçu comme un cône d'aération (143) avec un embout de cône d'aération (143a) qui est guidé mobile sur l'élément de réglage (64 ; 66 ; 164), et avec un disque de cône d'aération (143d) qui est monté en avant dudit embout, en direction de l'enveloppe de siège de soupape (2), et **en ce qu'**il est prévu, creusée dans l'élément de réglage (64 ; 66 ; 164), une zone de guidage (64c ; 164c) qui reçoit l'embout de cône d'aération (143a), qui, côté enveloppe de siège de soupape, part d'une surface d'application étanche (64d ; 164d) formée sur l'élément de réglage (64 ; 164), et qui est entourée, à son extrémité opposée, par une surface d'application annulaire (64e ; 164e).

4. Robinetterie de régulation ou d'arrêt selon l'une des revendications précédentes, **caractérisée en ce que** l'embout de cône d'aération (143a), dans la première position, dépasse de la surface d'application (64e ; 164e), tandis que dans la seconde position, un élément de tête (163) est appliqué sur la surface d'application (64e ; 164e) et contre l'embout de cône d'aération (143a) et qu'un passage d'aération (163a) creusé sur l'élément de tête (163) communique avec la zone de guidage (64c ; 164c).

5. Robinetterie de régulation ou d'arrêt selon l'une des revendications précédentes, **caractérisée en ce que** la tige intermédiaire (63) est conçue comme une tige creuse.

6. Robinetterie de régulation ou d'arrêt selon la revendication 5, **caractérisée en ce que** la tige intermédiaire (63) est disposée entre la tige (41) et l'élément de tête (163).

7. Robinetterie de régulation ou d'arrêt selon l'une des revendications précédentes, **caractérisée en ce que** l'élément de tête (163) est conçu comme un élément d'un raccord (66) qui est accouplé par vissage à la tige (41) et qui est maintenu fixe en rotation dans l'enveloppe de sortie de soupape (4).

8. Robinetterie de régulation ou d'arrêt selon l'une des revendications précédentes, **caractérisée en ce que** l'élément de tête (163) est logé, mobile, dans l'enveloppe de sortie de soupape (4).

9. Robinetterie de régulation ou d'arrêt selon la revendication 7, **caractérisée en ce que** l'élément de réglage (164) est disposé sur l'extrémité de la tige intermédiaire (63) située côté sortie et comprend une section de douille (164g) qui reçoit l'élément de tête (163) et qui est montée de manière étanche et mobile dans l'enveloppe de sortie de soupape (4).

10. Robinetterie de régulation ou d'arrêt selon la revendication 9, **caractérisée en ce que** la section de douille (64g) est guidée axialement, de manière étanche, dans une douille (204) introduite de manière étanche dans l'enveloppe de sortie de soupape (4).

11. Robinetterie de régulation ou d'arrêt selon la revendication 9, **caractérisée en ce que** la douille (204) est réalisée d'une seule pièce avec la partie supérieure de soupape (42).

12. Robinetterie de régulation ou d'arrêt selon l'une des revendications précédentes, **caractérisée en ce que** l'élément de réglage (64 ; 164) comprend une section de réception de disque de cône (164h) qui est prévue en avant de la surface d'application étanche (146d ; 164d), qui reçoit le disque de cône d'aération (143d) et qui communique avec au moins un passage d'aération (64f ; 164f) menant à un espace annulaire (8) qui est prévu entre la tige intermédiaire (63) et le tube intermédiaire (6).

13. Robinetterie de régulation ou d'arrêt selon la revendication 11, **caractérisée en ce que** le passage d'aération (64f ; 164f), même dans la position ouverte de l'élément d'aération (143), est prévu en avant de celui-ci, en direction du siège de soupape (21).

14. Robinetterie de régulation ou d'arrêt selon l'une des revendications précédentes, **caractérisée en ce que** l'élément de tête (163) comprend une section tubulaire (163b) apte à être appliquée côté frontal contre l'embout de cône d'aération (143a) et définissant avec l'élément de réglage (164) un espace annulaire qui reçoit un ressort (26) agissant sur l'élément de tête (163) et en appui contre l'élément de réglage (164) et qui est entouré par la section de douille (64g), et **en ce que** le passage d'aération (163a) formé par la section tubulaire (163b) à travers l'élément de tête (163) mène radialement vers l'extérieur et communique avec l'environnement.

15. Robinetterie de régulation ou d'arrêt selon l'une des revendications précédentes, **caractérisée par** au moins un logement de tige intermédiaire (43) qui va en rétrécissant radialement, qui est prévu sur l'extrémité de l'élément de réglage (64) située côté enveloppe de siège de soupape et qui forme une rampe d'arrêt (51) pour la fixation par force de la tige intermédiaire (63).

16. Robinetterie de régulation ou d'arrêt selon la revendication 15, **caractérisée en ce que** le logement de tige intermédiaire (43) présente un perçage (44) dont le diamètre est plus grand que le diamètre de la tige intermédiaire (63), et **en ce que** le perçage (44), à une distance axiale de l'ouverture du perçage, présente une partie rétrécie (49).

17. Robinetterie de régulation ou d'arrêt selon l'une des revendications 15 ou 16, **caractérisée en ce qu'**au moins une partie rétrécie (49) du perçage (44) est réalisée par usinage par déformation de la surface extérieure du logement de tige intermédiaire (43).
